# EUROPEAN PATENT APPLICATION

(11) **EP 3 831 884 A1**
(43) Date of publication of application: **09.06.2021**
(21) Application number: 19845239.3
(22) Date of filing: 22.07.2019
(51) Int. Cl.: C08L 71/12, C08L 77/00, C08L 77/06, C08L 77/08, C08L 25/08

(54) **POLYAMIDE/POLYPHENYLENE ETHER RESIN COMPOSITION AND MOLDED PRODUCT USING SAME**

(30) Priority: 31.07.2018 KR 20180089603
(71) Applicant: Lotte Chemical Corporation, Seoul, 05551 (KR)
(72) Inventor: CHOI, Wonyoung, Uiwang-si, Gyeonggi-do 16073 (KR); JIN, Youngsub, Uiwang-si, Gyeonggi-do 16073 (KR); KIM, Sehyun, Uiwang-si, Gyeonggi-do 16073 (KR); BAN, Kyunha, Uiwang-si, Gyeonggi-do 16073 (KR)
(74) Representative: Agasse, Stéphane
(86) International application number: PCT/KR2019/009007
(87) International publication number: WO 2020/027477

(57) **Abstract**

The present invention relates to a polyamide/polyphenylene ether resin composition and a molded product using same, the polyamide/polyphenylene ether resin composition comprising, based on 100 parts by weight of a base resin which includes (A) 30 wt% to 60 wt% of a polyphenylene ether resin, (B) 25 wt% to 55 wt% of polyamide 66 resin and (C) 5 wt% to 40 wt% of a polyamide resin containing a long aliphatic chain, (D) 5 parts by weight to 10 parts by weight of an impact modifier and (E) 0.5 parts by weight to 1 part by weight of a compatibilizer.

## Description

### [Technical Field]

A polyamide/polyphenylene ether resin composition and a molded product using the same are disclosed.

### [Background Art]

Plastic materials are inferior to metals or ceramic materials in terms of heat resistance, flame retardancy, and the like but widely used as industrial materials covering from daily necessities to automobiles, and electricity, electronics, and industrial fields due to their light weight, design freedom, and excellent molding processability. The plastic materials have been developed into various types from commodity plastics to engineering plastics and thus are widely applied in fields that require various functions and performances. Among these, polyphenylene ether (PPE) has excellent electrical and mechanical properties and also, a high heat deflection temperature and so, may be used in a wide range of fields as an engineering plastic material. The polyphenylene ether has become a useful industrial material in a blend from with high-impact polystyrene based on its excellent heat resistance. Relatively recently, reaction extrusion technology of making incompatible blends be compatible by a chemical method is adopted to obtain a polyamide/polyphenylene ether alloy by adding a compatibilizer as a third component to a polyamide/polyphenylene ether blend. Such polyamide/polyphenylene ether effectively compensates for drawbacks of each constituent resin and thus balances properties such as heat resistance, impact resistance, chemical resistance, and the like and accordingly, is used as automobile exterior parts such as wheel caps, junction boxes, and the like and under-the-hood parts. On the other hand, in recent years, there is a need for a plastic exterior part material capable of on-line electrostatic painting which may be electrostatically painted simultaneously with other metal material parts. When applied to these uses, a conductive filler such as carbon fiber, carbon black, or the like may be added to the polyamide/polyphenylene ether to impart conductivity thereto, and this conductive polyamide/polyphenylene ether is being applied to automobile fender parts and the like. The conductive polyamide/polyphenylene ether may be electrostatically painted simultaneously with other metal material parts. However, since polyamide generally has high hygroscopicity, the polyamide/polyphenylene ether including the polyamide is vulnerable to moisture. The polyamide may absorb moisture in the subsequent processes of assembly, painting, and/or the like after manufacturing a molded product through injection molding and the like and thus bring about a dimensional change of the molded product. Accordingly, the molded product should be stored under a low humid environment and thus may be difficult to maintain/manage. In addition, even if the polyamide/polyphenylene ether exhibits a high heat deflection temperature, the resin may be decomposed even by a small amount of moisture, when manufactured into the molded product at a high temperature. In order to control this, various methods of controlling molding process conditions have been suggested. Accordingly, there are needs for a polyamide/polyphenylene ether resin composition capable of suppressing the hygroscopicity of the polyamide and the resulting dimensional deformation.

### [Disclosure]

### [Description of the Drawings]

### [Technical Problem]

A polyamide/polyphenylene ether resin composition capable of suppressing hygroscopicity of polyamide and the resulting dimensional deformation, and a molded product using the same are provided.

### [Technical Solution]

According to an embodiment, a polyamide/polyphenylene ether resin composition includes, based on 100 parts by weight of a base resin which includes (A) 30 wt% to 60 wt% of a polyphenylene ether resin, (B) 25 wt% to 55 wt% of polyamide 66 resin, and (C) 5 wt% to 40 wt% of a polyamide resin containing a long aliphatic chain, (D) 5 parts by weight to 10 parts by weight of an impact modifier, and (E) 0.5 parts by weight to 1 part by weight of a compatibilizer.

A weight ratio (B:C) of the (B) polyamide 66 resin and the (C) polyamide resin containing a long aliphatic chain may be greater than 1:1 and less than 9:1.

The (C) polyamide resin containing a long aliphatic chain may include at least one selected from polyamide 610, polyamide 612, polyamide 1010, polyamide 1012, and polyamide 1212.

The (A) polyphenylene ether resin may include poly(2,6-dimethyl-1,4-phenylene) ether, poly(2,6-diethyl-1,4-phenylene) ether, poly(2,6-dipropyl-1,4-phenylene) ether, poly(2-methyl-6-ethyl-1,4-phenylene) ether, poly(2-methyl-6-propyl-1,4-phenylene) ether, poly(2-ethyl-6-propyl-1,4-phenylene) ether, poly(2,6-diphenyl-1,4-phenylene) ether, a copolymer of poly(2,6-dimethyl-1,4-phenylene) ether and poly(2,3,6-triethyl-1,4-phenylene) ether, or a combination thereof.

The (D) impact modifier may include an aromatic vinyl-based elastomer, an olefin-based elastomer, or a combination thereof.

The (D) impact modifier may be a styrene-ethylene/butylene-styrene copolymer (SEBS).

The (E) compatibilizer may include maleic acid, maleic anhydride, maleic hydrazide, dichloro maleic anhydride, unsaturated dicarboxylic acid, fumaric acid, citric acid, citric anhydride, malic acid, agaric acid, or a combination thereof.

The polyamide/polyphenylene ether resin composition may further include at least one additive selected from a flame retardant, a lubricant, a plasticizer, a heat stabilizer, an antioxidant, a light stabilizer, a colorant, and a conductive filler.

On the other hand, according to another embodiment, a molded product manufactured from the aforementioned polyamide/polyphenylene ether resin composition is provided.

The molded product may have a water absorption of less than or equal to 0.3%, measured at 25 °C under 50% relative humidity according to ISO 62.

The molded product may have a shrinkage of less than or equal to 2.0%, measured according to ASTM D955.

The molded product may have a flexural modulus of greater than or equal to 20,000 kgf/cm², measured according to ASTM D790.

### [Advantageous Effects]

The polyamide/polyphenylene ether resin composition has excellent impact resistance, flowability, and stiffness, and also may suppress moisture absorption and dimensional deformation caused by polyamide, so it may be widely applied to the molding of various products used for painting or non-painting. In particular, the polyamide/polyphenylene ether resin composition may be usefully applied to parts such as automobile exteriors, for example, automobile fenders, and a molded product manufactured therefrom.

### [Mode for Invention]

Hereinafter, embodiments of the present invention are described in detail. However, this is presented as an example, and the present invention is not limited thereby, and the present invention is only defined by the appended claims.

An embodiment provides a polyamide/polyphenylene ether resin composition that has improved impact resistance, flowability, and stiffness, and is capable of suppressing hygroscopicity and dimensional deformation caused by polyamide.

The polyamide/polyphenylene ether resin composition includes, based on 100 parts by weight of a base resin which includes (A) 30 wt% to 60 wt% of a polyphenylene ether resin, (B) 25 wt% to 55 wt% of polyamide 66 resin and (C) 5 wt% to 40 wt% of a polyamide resin containing a long aliphatic chain, (D) 5 parts by weight to 10 parts by weight of an impact modifier, and (E) 0.5 parts by weight to 1 part by weight of a compatibilizer.

Hereinafter, each component included in the polyamide/polyphenylene ether resin composition is described in detail.

### (A) Polyphenylene Ether Resin

The polyphenylene ether resin may be a resin including a polyphenylene ether polymer, a mixture of a polyphenylene ether polymer and a vinyl aromatic polymer, or a modified polyphenylene ether polymer in which a reactive monomer reacts with a polyphenylene ether polymer and two or more types may be mixed and used.

The polyphenylene ether polymer may include one or more selected from poly(2,6-dimethyl-1,4-phenylene) ether, poly(2,6-diethyl-1,4-phenylene) ether, poly(2,6-dipropyl-1,4-phenylene) ether, poly(2-methyl-6-ethyl-1,4-phenylene) ether, poly(2-methyl-6-propyl-1,4-phenylene) ether, poly(2-ethyl-6-propyl-1,4-phenylene) ether, poly(2,6-diphenyl-1,4-phenylene) ether, or a copolymer of poly(2,6-dimethyl-1,4-phenylene) ether and poly(2,3,6-trimethyl-1,4-phenylene) ether.

For example, poly(2,6-dimethyl-1,4-phenylene) ether or a copolymer of poly(2,6-dimethyl-1,4-phenylene) ether and poly(2,3,6-trimethyl-1,4-phenylene) ether may be used, and for example poly(2,6-dimethyl-1,4-phenylene) ether may be used.

The vinyl aromatic polymer may be a polymer of a single monomer or two or more vinyl aromatic monomers selected from styrene, p-methylstyrene, α-methylstyrene, or 4-n-propylstyrene, and among them, it is effective to polymerize a vinyl aromatic monomer selected from styrene or α-methylstyrene alone or a combination thereof.

The reactive monomer may be a compound including an unsaturated carboxylic acid group or an anhydride group thereof, or may be reacted to be modified with an unsaturated carboxylic acid group or an anhydride group thereof, and the reactive monomer serves to react with the polyphenylene ether polymer according to an embodiment of the present invention to form a modified polyphenylene ether polymer.

The reactive monomer may be selected from citric acid, citric anhydride, maleic anhydride, maleic acid, itaconic anhydride, fumaric acid, (meth)acrylic acid, (meth)acrylic acid ester, and a combination thereof.

The method for preparing the modified polyphenylene ether polymer reacted with the reactive monomer is not particularly limited, but considering that the reaction temperature is relatively high, it is effective to perform a graft reaction in a melt-kneaded state using a phosphite-based thermal stabilizer.

A polymerization degree of the polyphenylene ether polymer according to an embodiment of the present invention is not particularly limited, but an intrinsic viscosity measured in a chloroform solvent at 25 °C may be desirably 0.2 dl/g to 0.8 dl/g, and more desirably 0.3 dl/g to 0.6dl/g.

In the case of having an intrinsic viscosity in the above range, heat resistance and mechanical strength are improved and processing is easy.

An amount of the polyphenylene ether resin may be, for example 30 wt% to 60 wt%, for example 30 wt% to 50 wt%, 35 wt% to 45 wt%, for example about 40 wt% based on 100 wt% of the base resin. When the amount of the polyethylene ether resin is out of the above range, compatibility, mechanical properties, and heat resistance of the polyamide/polyphenylene ether resin composition may be deteriorated.

### (B) Polyamide 66 Resin

The polyamide 66 resin includes polyamide 66. The polyamide 66 may be a type of polyamide containing amino acids, lactams, or diamines and dicarboxylic acids as main monomer components, and may be specifically obtained by reacting hexamethylenediamine and adipic acid.

In an embodiment, the polyamide 66 imparts excellent flexibility and chemical resistance to the polyamide/polyphenylene ether resin composition.

In an embodiment, the polyamide 66 has a relatively low hygroscopicity compared with general polyamide 6. Accordingly, when the polyamide 66 is used, a hygroscopicity and dimensional deformation of the polyamide/polyphenylene ether resin composition may be more suppressed compared with polyamide 6.

In an embodiment, an amount of the polyamide 66 resin may be 25 wt% to 55 wt%, for example 30 wt% to 55 wt%, 35 wt% to 55 wt%, for example 40 wt% to 50 wt% based on 100 wt% of the base resin. When the amount of the polyamide 66 resin is out of the above range, flexibility and chemical resistance of the polyamide/polyphenylene ether resin composition may be deteriorated, or processing may be difficult.

### (C) Polyamide Resin Containing a Long Aliphatic Chain

The polyamide resin containing a long aliphatic chain refers to a polyamide polymer having a long aliphatic chain in the main chain of C5 or more, for example C6 or more, for example C8 or more, for example C10 or more.

In an embodiment, the polyamide resin containing a long aliphatic chain may include, for example, one or more selected from polyamide 610, polyamide 612, polyamide 1010, polyamide 1012, and polyamide 1212.

The polyamide resin containing a long aliphatic chain may also perform a function of improving excellent flexibility and chemical resistance to the polyamide/polyphenylene ether resin composition in addition to the aforementioned polyamide 66 resin.

For this purpose, an amount of the polyamide resin containing a long aliphatic chain may be 5 wt% to 40 wt%, for example 5 wt% to 30 wt%, for example 5 wt% to 25 wt%, for example 10 wt% to 20 wt% based on 100 wt% of the base resin.

On the other hand, since the polyamide resin containing a long aliphatic chain exhibits lower hygroscopicity compared with polyamide 6 or polyamide 66, in particular, when used together with polyamide 66, the hygroscopicity and dimensional deformation of the polyamide/polyphenylene ether resin composition may be greatly suppressed.

In an embodiment, the polyamide resin containing a long aliphatic chain in the base resin satisfies a predetermined amount ratio with the polyamide 66 resin, so as to greatly suppress moisture absorption and dimensional deformation while maintaining an overall physical property balance of the polyamide/polyphenylene ether resin composition.

Specifically, a weight ratio (B:C) of the (B) polyamide 66 resin and the (C) polyamide resin containing a long aliphatic chain may satisfy, for example, greater than 1:1 and less than 9:1, for example, 1:1.5 to less than 9:1, for example 1:1.5 to 8:1, for example 1:2 to 5:1.

When the weight ratio (B:C) of the polyamide 66 resin to the aliphatic long chain-containing polyamide resin is less than or equal to 1:1, the amount of the polyamide resin containing a long aliphatic chain is excessively high, which may hinder flowability of the polyamide/polyphenylene ether resin composition, while when it exceeds 9:1, the effect of lowering the hygroscopicity due to the addition of the polyamide resin containing a long aliphatic chain is difficult to exhibit.

### (D) Impact Modifier

The impact modifier may function to improve the impact resistance of the polyamide/polyphenylene ether resin composition.

As the impact modifier, an aromatic vinyl-based elastomer or an olefin-based elastomer may be used, and an aromatic vinyl-based elastomer and an olefin-based elastomer may be used in combination.

In an embodiment, the aromatic vinyl-based elastomer may be a block copolymer consisting of an aromatic vinyl compound and a conjugated diene compound; a hydrogenated block copolymer formed by hydrogenating a block copolymer consisting of an aromatic vinyl compound and a conjugated diene compound; a modified block copolymer in which the block copolymer is modified with a compound selected from α,β-unsaturated dicarboxylic acid and an α,β-unsaturated dicarboxylic acid derivatives; and a modified hydrogenated block copolymer in which the hydrogenated block copolymer is modified with a compound selected from α,β-unsaturated dicarboxylic acid and an α,β-unsaturated dicarboxylic acid derivative. In some cases, it is possible to mix and use two or more.

The aromatic vinyl compound may be styrene, p-methylstyrene, α-methylstyrene, bromostyrene, or chlorostyrene, and one or more may be combined. Styrene may be desirably used.

The aromatic vinyl-based elastomer may be derived from an aromatic vinyl compound, and may have a linear structures containing six or more A and B blocks in total as well as a linear structure including a diblock (A-B block), a triblock (A-B-A block), a tetrablock (A-B-A-B block), and a pentablock (A-B-A-B-A block) structure.

Specific examples of the aromatic vinyl-based elastomer may be a styrene-ethylene/butylene-styrene copolymer, a styrene-butadiene-styrene copolymer, a styrene-ethylene/propylene-styrene copolymer, a styrene-isoprene-styrene copolymer, a styrene-ethylene copolymer, or a styrene-ethylene/butadiene-styrene copolymer, a modified styrene-ethylene/butylene-styrene copolymer, a modified styrene-butadiene-styrene copolymer, a modified styrene-ethylene/propylene-styrene copolymer, a modified styrene-isoprene-styrene copolymers, a modified styrene-ethylene copolymer, or a modified styrene-ethylene/butadiene-styrene copolymer which is obtained by modifying the above substances with a compound selected from α,β-unsaturated dicarboxylic acid and an α,β-unsaturated dicarboxylic acid derivative, respectively. In some cases, it is possible to mix and use two or more. Desirably, a styrene-ethylene/butylene-styrene copolymer (SEBS) may be used.

On the other hand, the olefin-based elastomer may be selected from high density polyethylene, low density polyethylene, linear low density polyethylene, an ethylene-α-olefin copolymer, and a combination thereof. In addition, the olefin-based elastomer may be modified high density polyethylene, modified low density polyethylene, modified linear low density polyethylene, and a modified ethylene-α-olefin copolymer, which are obtained by respectively modifying the aforementioned materials with at least one compound of α,β-unsaturated dicarboxylic acid or an α,β-unsaturated dicarboxylic acid derivative. In some cases, it is possible to mix and use two or more.

The olefin-based elastomer may be a copolymer polymerized with an olefin-based monomer or a copolymer of the olefin-based monomer and an acryl-based monomer.

The olefin-based monomer may be C1 to C19 alkylene, and specific examples thereof may be ethylene, propylene, isopropylene, butylene, isobutylene, or octene, which may be used alone or as a mixture.

The acryl-based monomer may be (meth)acrylic acid alkyl ester or (meth)acrylic acid ester. Herein, the alkyl denotes C1 to C10 alkyl, and specific examples of the (meth)acrylic acid alkyl ester may be methyl (meth)acrylate, ethyl (meth)acrylate, propyl (meth)acrylate, and butyl (meth)acrylate, and in particular, the methyl (meth)acrylate is effective.

The olefin-based elastomer may include a reactive group capable of reacting with the polyamide. The olefin-based elastomer may have a structure that the reactive group is grafted into a main chain consisting of the olefin-based monomer or the copolymer of the olefin-based monomer and the acryl-based monomer.

The reactive group may be a maleic anhydride group or an epoxy group.

Desirable examples of the olefin-based elastomer containing a reactive group may include a modified ethylene-α-olefin copolymer or a modified low density polyethylene which is grafted with a maleic anhydride group. This improves compatibility of polyphenylene ether and polyamide.

According to an embodiment, the impact modifier may be included in an amount of 5 parts by weight to 10 parts by weight, for example, about 7 parts by weight based on 100 parts by weight of the base resin. When the amount of the impact modifier satisfies the above ranges, impact resistance of the polyamide/polyphenylene ether resin composition may be particularly improved.

### (E) Compatibilizer

The compatibilizer may be a compound including two types of functional groups or a compound modified through a reaction into the compound including two types of functional groups. One of the functional groups is a carbon-carbon double bond or a carbon-carbon triple bond, and the other may be selected from a carboxyl group, acid anhydride, an epoxy group, an imide group, an amide group, an ester group, acid chloride, or a functional equivalent group thereof.

Specific examples of the compatibilizer may be maleic acid, maleic anhydride, maleic hydrazide, dichloro maleic anhydride, unsaturated dicarboxylic acid, fumaric acid, citric acid, citric anhydride, malic acid, or agaric acid. In some cases, it may be mixed and used.

Preferable examples of the compatibilizer may be maleic acid, maleic anhydride, fumaric acid, citric acid, and citric anhydride, and maleic anhydride and citric anhydride are particularly effective.

When the compatibilizer or the modified product of the compatibilizer reacts with polyphenylene ether and polyamide, the polyphenylene ether and a polyamide block copolymer are produced.

The block copolymer is distributed on the interface of two components in the polyamide/polyphenylene ether resin composition and thus stabilizes morphology of the resin composition. In particular, when the polyphenylene ether forms the morphology, in which the polyphenylene ether becomes a domain (a dispersed phase), and the polyamide becomes a matrix (a continuous phase), in the polyamide/polyphenylene ether resin composition, the block copolymer plays an important role in controlling a particle diameter of the domain to be about 1 µm and thus have effective impact resistance.

The compatibilizer may be included in an amount of 0.5 parts by weight to 1 part by weight, for example, about 0.8 parts by weight based on 100 parts by weight of the base resin in the polyamide/polyphenylene ether resin composition. When the compatibilizer is included in an amount of less than 0.5 parts by weight, the impact resistance improvement effect may not be significant, and when the amount is greater than 1 part by weight, other properties may be deteriorated.

### (F) Additives

In addition to the aforementioned components (A) to (E), the polyamide/polyphenylene ether resin composition may further include at least one additive selected from a flame retardant, a lubricant, a plasticizer, a heat stabilizer, an antioxidant, a light stabilizer, a colorant, and a conductive filler. The additives may be used as a mixture of at least two depending on characteristics of a final molded product.

The flame retardant may be a material that reduces combustibility, and may include at least one of a phosphate compound, a phosphite compound, a phosphonate compound, a polysiloxane, a phosphazene compound, a phosphinate compound, or a melamine compound, but is not limited thereto.

The lubricant lubricates the surface of a metal contacting a resin composition during a processing, molding, or extrusion process and thus helps a flow or movement of the resin composition and may be a conventionally-used material.

The plasticizer is used to increase flexibility, process workability, or an expansion property of the resin composition and may be a conventionally-used material.

The heat stabilizer suppresses thermal decomposition of the resin composition when kneaded or molded at a high temperature and may be a conventionally-used material.

The antioxidant may suppress or block a chemical reaction of the aforementioned resin composition with oxygen and thus prevent decomposition of the resin composition and loss of its inherent properties and include at least one of phenol-type, phosphate-type, thioether-type, or amine-type antioxidants, but is not limited thereto.

The light stabilizer suppresses or blocks decomposition of the resin composition from ultraviolet (UV) and thus a color change or loss of a mechanical property, and may include desirably titanium oxide.

The colorant may include a pigment or dye.

The conductive filler may use, for example, at least one of carbon black or carbon fibril as an additive used to impart conductivity to the polyamide/polyphenylene ether resin composition.

A type of the carbon black is not particularly limited, but conductive carbon black may be used, and specific examples of the carbon black may include graphitized carbon, furnace black, acetylene black, and ketjen black.

The carbon fibril is a fiber-type carbon material including a carbon element in a mass amount of greater than or equal to 90 wt%. Among the carbon fibrils, carbon nanotube may be desirably used. The carbon nanotube has a large aspect ratio and a large specific surface area and excellent mechanical characteristics, electrical characteristics, and thermal characteristics and may be used as an effective engineering plastic material.

The carbon nanotube may be classified into single-walled carbon nanotube, double-walled carbon nanotube, and multi-walled carbon nanotube depending on the number of walls and also, classified into zigzag, armchair, and chiral structures depending on an angle at which graphene surfaces are rolled, which may be variously used without being limited to the types and structures, but the multi-walled carbon nanotube may be desirably used.

The carbon nanotube has no particularly-limited size but a diameter ranging from 0.5 nm to 100 nm and specifically, 1 nm to 10 nm and a length of 0.01 µm to 100 µm and specifically, 0.5 µm to 10 µm. Within the diameter and length ranges, more excellent conductivity and processability are obtained.

In addition, the carbon nanotube has a large aspect ratio (L/D) due to the aforementioned sizes, and carbon nanotube with L/D of 100 to 1,000 may bring about an excellent conductivity improvement effect.

The additive may be included in an amount of 0.1 parts by weight to 20 parts by weight based on 100 parts by weight of the base resin. When the additive is included out of the range, mechanical properties of the polyamide/polyphenylene ether resin composition may be deteriorated, or a molded product made by using the resin composition may have defective appearances.

On the other hand, another embodiment provides a molded product including the thermoplastic resin composition according to the embodiment. The molded product may be manufactured by using the thermoplastic resin composition in various methods known in the art, for example, injection molding, extrusion molding, and the like.

The molded product may have a water absorption of less than or equal to 0.3%, for example, less than or equal to 0.29%, for example, less than or equal to 0.28% at 25 °C under 50% relative humidity according to ISO 62.

The molded product may have a shrinkage of less than or equal to 2.0%, for example, less than or equal to 1.98%, for example, less than or equal to 1.95%, measured according to ASTM D955.

The molded product may have a flexural modulus of at least greater than or equal to 20,000 kgf/cm², for example, greater than or equal to 20,100 kgf/cm², for example, greater than or equal to 20,200 kgf/cm², for example, greater than or equal to 20,300 kgf/cm², for example, greater than or equal to 20,400 kgf/cm², for example, greater than or equal to 20,500 kgf/cm², for example, greater than or equal to 21,000 kgf/cm², or, for example, 20,000 kgf/cm² to 30,000 kgf/cm², measured according to ASTM D790.

In other words, the molded product is formed by using the aforementioned polyamide/polyphenylene ether resin composition and thus has excellent impact resistance and flowability. In addition, the molded product may be adjusted to have an excellent flexural modulus by controlling an amount of long aliphatic chain-containing polyamide included along with polyamide 66 and/or an amount ratio of the polyamide 66 and the long aliphatic chain-containing polyamide. Accordingly, the molded product may be suppressed from hygroscopicity caused by the polyamide and the resulting dimensional deformation.

Therefore, the molded product may be widely applied to the molding of various products used with painting or non-painting and particularly, usefully applied for automobile interiors/exteriors. For example, when the molded product includes the conductive filler, the on-line electrostatic painting and the like may be easily used. Specifically, the molded product may be, for example, easily used for parts such as automobile fenders and the like but are not limited thereto.

Hereinafter, preferred examples of the present invention will be described. These examples, however, are not in any sense to be interpreted as limiting the scope of the invention.

### Examples 1 to 2 and Comparative Examples 1 to 6

The polyamide/polyphenylene ether resin compositions according to Examples 1 to 2 and Comparative Examples 1 to 6 were respectively prepared to have each component amount ratio shown in Table 1.

The components shown in the main feeding section of Table 1 were dry-mixed and continuously quantitatively put into a main feeding port of a twin-screw extruder, TEX-40 (Japan Steel Works (JSW) Ltd.). The components in the side feeding section of Table 1 were continuously quantitatively put into the side feeding port of the twin-screw extruder and then, melted/kneaded. Herein, the extruder was set at a screw rotation speed of 400 rpm and at an overall production rate of about 100 kg per hour. Subsequently, a pelletized resin composition was obtained through the extruder.

(A) to (C) constituting the base resin were 100 parts by weight in total, and the others (D) to (F) were respectively marked as parts by weight based on this.

**(Table 1)**

| Input position | Comp onent | Ex. 1 | Ex. 2 | Comp. Ex. 1 | Comp. Ex. 2 | Comp. Ex. 3 | Comp. Ex. 4 | Comp. Ex. 5 | Comp. Ex. 6 |
|---|---|---|---|---|---|---|---|---|---|
| Main feeding | (A) | 40 | 40 | 40 | 40 | 40 | 40 | 40 | 40 |
| | (D) | 7 | 7 | 7 | 7 | 7 | 7 | 7 | 7 |
| | (E) | 0.8 | 0.8 | 0.8 | 0.8 | 0.8 | 0.8 | 0.8 | 0.8 |
| | (F) | 0.3 | 0.3 | 0.3 | 0.3 | 0.3 | 0.3 | 0.3 | 0.3 |
| Side feeding | (B) | 50 | 40 | 60 | 40 | 20 | 0 | 20 | 54 |
| | (C) | 10 | 20 | 0 | 0 | 0 | 0 | 40 | 6 |
| | polya mide 6 | 0 | 0 | 0 | 20 | 40 | 60 | 0 | 0 |

The components shown in Table 1 are illustrated as follows.

### (A) Polyphenylene Ether Resin

A polyphenylene ether resin product of China National Bluestar Co., Ltd. was used.

### (B) Polyamide 66

A polyamide 66 resin product of Solvay was used.

### (C) Polyamide Containing a Long Aliphatic Chain

A polyamide 612 resin product of Shandong Dongcheon Co., Ltd. was used.

### (D) Impact Modifier

A SEBS product of Kraton Corp. was used.

### (E) Compatibilizer

Citric acid of Samchun Chemical Co. was used.

### (F) Additive (Stabilizer)

A hindered phenol-based antioxidant product of BASF was used.

### Polyamide 6

A polyamide 6 resin product of KP Chemtech was used.

### Experimental Examples

Experimental results are shown in Table 2.
(1) Impact resistance (kJ/m²): Izod impact strength of 1/8 inch-thick specimens was measured at room temperature according to ASTM D256.
(2) Flowability (g/10 min): melt flow index was measured at 280 °C according to ASTM D1238 under a condition of 5 kg.
(3) Stiffness (kgf/cm²): flexural modulus of the 1/8 inch-thick specimens was measured according to ASTM D790.
(4) Water absorption (%):water absorption was measured at 25 °C under relative humidity of 50% according to ISO 62.
(5) Shrinkage (%):shrinkage was measured according to ASTM D955.

**(Table 2)**

| | Ex. 1 | Ex. 2 | Comp . Ex. 1 | Comp . Ex. 2 | Comp . Ex. 3 | Comp . Ex. 4 | Comp . Ex. 5 | Comp . Ex. 6 |
|---|---|---|---|---|---|---|---|---|
| Impact resistance (kJ/m²) | 16 | 15 | 16 | 15 | 15 | 14 | 13 | 16 |
| Flowability (g/10min) | 16 | 16 | 14 | 17 | 17 | 19 | 16 | 16 |
| Stiffness (kgf/cm²) | 22,0 00 | 20,5 00 | 23,50 0 | 22,00 0 | 21,00 0 | 20,00 0 | 19,00 0 | 23,00 0 |
| Water absorption (%) | 0.28 | 0.25 | 0.32 | 0.34 | 0.37 | 0.39 | 0.20 | 0.31 |
| Shrinkage (%) | 1.95 | 1.91 | 2.04 | 2.06 | 2.09 | 2.12 | 1.86 | 2.02 |

Referring to Tables 1 to 2, when each polyamide/polyphenylene ether resin composition including a polyamide 66 resin and a polyamide resin containing a long aliphatic chain in the aforementioned ratios was used, a molded product having a minimized water absorption and shrinkage as well as maintaining excellent impact resistance, flowability, and stiffness was manufactured.

While this invention has been described in connection with what is presently considered to be practical example embodiments, it is to be understood that the invention is not limited to the disclosed embodiments. On the contrary, it is intended to cover various modifications and equivalent arrangements included within the spirit and scope of the appended claims.

## Claims

1. A polyamide/polyphenylene ether resin composition, comprising based on 100 parts by weight of a base resin which comprises
(A) 30 wt% to 60 wt% of a polyphenylene ether resin,
(B) 25 wt% to 55 wt% of polyamide 66 resin, and
(C) 5 wt% to 40 wt% of a polyamide resin containing a long aliphatic chain,
(D) 5 parts by weight to 10 parts by weight of an impact modifier, and
(E) 0.5 parts by weight to 1 part by weight of a compatibilizer.

2. The polyamide/polyphenylene ether resin composition of claim 1, wherein a weight ratio (B:C) of the (B) polyamide 66 resin and the (C) polyamide resin containing a long aliphatic chain is greater than 1:1 and less than 9:1.

3. The polyamide/polyphenylene ether resin composition of claim 1 or claim 2, wherein the (C) polyamide resin containing a long aliphatic chain comprises at least one selected from polyamide 610, polyamide 612, polyamide 1010, polyamide 1012, and polyamide 1212.

4. The polyamide/polyphenylene ether resin composition of any one of claim 1 to claim 3, wherein the (A) polyphenylene ether resin comprises poly(2,6-dimethyl-1,4-phenylene) ether, poly(2,6-diethyl-1,4-phenylene) ether, poly(2,6-dipropyl-1,4-phenylene) ether, poly(2-methyl-6-ethyl-1,4-phenylene) ether, poly(2-methyl-6-propyl-1,4-phenylene) ether, poly(2-ethyl-6-propyl-1,4-phenylene) ether, poly(2,6-diphenyl-1,4-phenylene) ether, a copolymer of poly(2,6-dimethyl-1,4-phenylene) ether and poly(2,3,6-triethyl-1,4-phenylene) ether, or a combination thereof.

5. The polyamide/polyphenylene ether resin composition of any one of claim 1 to claim 4, wherein the (D) impact modifier comprises an aromatic vinyl-based elastomer, an olefin-based elastomer, or a combination thereof.

6. The polyamide/polyphenylene ether resin composition of any one of claim 1 to claim 5, wherein the (D) impact modifier is a styrene-ethylene/butylene-styrene copolymer (SEBS).

7. The polyamide/polyphenylene ether resin composition of any one of claim 1 to claim 6, wherein the (E) compatibilizer comprises maleic acid, maleic anhydride, maleic hydrazide, dichloro maleic anhydride, unsaturated dicarboxylic acid, fumaric acid, citric acid, citric anhydride, malic acid, agaric acid, or a combination thereof.

8. The polyamide/polyphenylene ether resin composition of any one of claim 1 to claim 7, which further comprises at least one additive selected from a flame retardant, a lubricant, a plasticizer, a heat stabilizer, an antioxidant, a light stabilizer, a colorant, and a conductive filler.

9. A molded product manufactured from the polyamide/polyphenylene ether resin composition of any one of claim 1 to claim 8.

10. The molded product of claim 9, wherein the molded product has a water absorption of less than or equal to 0.3%, measured at 25 °C under 50% relative humidity according to ISO 62.

11. The molded product of claim 9 or claim 10, wherein the molded product has a shrinkage of less than or equal to 2.0%, measured according to ASTM D955.

12. The molded product of any one of claim 9 to claim 11, wherein the molded product has a flexural modulus of greater than or equal to 20,000 kgf/cm², measured according to ASTM D790.
